# FASCICULE DE BREVET EUROPEEN

(11) **EP 4 453 764 B1**
(45) Date de publication et mention de la délivrance du brevet: **27.08.2025**
(21) Numéro de dépôt: 22818849.6
(22) Date de dépôt: 23.11.2022
(51) Int. Cl.: G06F 21/52, G06F 21/64, G06F 21/79, G06F 12/14, G06F 13/16, G06N 3/063, G06F 13/28

(54) **MODULE ET PROCÉDÉ DE SÉCURISATION D'UN ÉQUIPEMENT INFORMATIQUE**
MODUL UND VERFAHREN ZUR SICHERUNG EINER COMPUTERVORRICHTUNG
MODULE AND METHOD FOR SECURING A COMPUTER DEVICE

(30) Priorité: 22.12.2021 FR 2114271
(43) Date de publication de la demande: 30.10.2024
(73) Titulaire: Orange, 92130 Issy-les-Moulineaux (FR)
(72) Inventeur: SANCHEZ-LEIGHTON, Vincente, 92326 Chatillon (FR); GONZALEZ, Laurent, 92326 Chatillon (FR)
(74) Mandataire: Cabinet Beau de Loménie
(86) Numéro de dépôt international: PCT/EP2022/082911
(87) Numéro de publication internationale: WO 2023/117270

(56) Documents cités:
- EP-A1- 1 056 010
- FR-A1- 3 032 814
- US-A1- 2011 078 791
- US-A1- 2019 042 781
- US-A1- 2020 379 923

## Description

### Arrière-plan de l'invention

La présente invention se rapporte au domaine de la sécurisation des systèmes informatiques.

Elle trouve un avantage particulier, mais non limitatif, pour la sécurisation des objets connectés (en anglais « Internet of Things », IoT).

Ces objets connectés sont aujourd'hui dépourvus de moyens de sécurisation efficaces, en particulier pour des raisons de coûts de fabrication.

Ils sont donc vulnérables. Le document US2019/042781 A1 divulgue un dispositif de stockage sécurisé adapté à protéger un processeur hôte d'accès non-autorisés.

L'invention propose une solution pour remédier à cette situation qui n'est pas satisfaisante.

### Objet et résumé de l'invention

Ainsi, et selon un premier aspect, l'invention concerne un module de sécurisation d'un équipement informatique, ce module comportant :
- au moins une mémoire RAM accessible par un processeur hôte externe audit module de sécurisation, via un bus mémoire;
- un contrôleur configuré pour pouvoir être programmé par le processeur hôte via un canal de contrôle ;
- des unités de traitement de données configurées pour pouvoir accéder à des zones de ladite mémoire via une interface DMA, ces unités de traitement de données étant contrôlées par le contrôleur ;
- ledit contrôleur étant configuré pour contrôler l'accès à ladite mémoire soit par le processeur hôte soit par les unités de traitement de données ;
- ledit contrôleur étant configuré pour mettre en œuvre au moins une évaluation heuristique d'un état de sécurité de l'équipement informatique tel que perçu par ledit contrôleur, ladite évaluation heuristique comportant :
   (i) le chargement d'instructions dans une mémoire d'instructions de ladite unité de traitement de données pour que celle-ci effectue au moins une opération sur au moins une partie de ladite mémoire;
   (ii) l'obtention d'un résultat de ladite opération ;
   (iii) la détermination dudit état de sécurité à partir dudit résultat,
- ledit contrôleur étant configuré pour corrompre ladite mémoire en fonction dudit état de sécurité pour déclencher un arrêt ou un redémarrage du fonctionnement dudit processeur hôte dudit équipement informatique.

Ainsi, et d'une façon générale, l'invention propose un module de sécurisation d'un équipement informatique, ce module présentant l'avantage de pouvoir être installé en remplacement de la mémoire RAM de l'équipement informatique à sécuriser.

Cette caractéristique est particulièrement avantageuse car le module de sécurisation peut être très facilement intégré dans l'équipement informatique à sécuriser, sans modification importante de son logiciel ni de son architecture matérielle.

Dans le mode de réalisation décrit ici, ces modules de sécurisation ont une architecture du type de celles des PIM DRAMs (PIM pour, en anglais, « processor in memory ») décrites dans le document FR3032814A1.

Les modules de sécurisation proposés par l'invention peuvent être fabriqués avec les technologies utilisées pour fabriquer des DRAM conventionnelles comme celles des PIM décrites dans le document FR3032814A1. Ils se comportent et sont vus du processeur hôte comme une DRAM classique mais ils offrent en plus une fonction de sécurisation de l'équipement informatique. En ce sens le contrôleur embarqué dans le module de sécurisation et son unité de traitement de données peuvent être vus comme un coprocesseur de sécurisation du processeur hôte.

Ce contrôleur met en œuvre une ou plusieurs évaluations heuristiques de l'état de sécurité de l'équipement informatique en analysant la mémoire utilisée par le processeur hôte. Comme le contrôleur n'a pas lui-même directement accès à la mémoire, il s'appuie, notamment pour toutes les opérations d'accès à la mémoire, sur les unités de traitement de données, chacune d'entre elles pouvant accéder, sous le contrôle du contrôleur, à une partie de mémoire partagée avec le processeur hôte.

Les heuristiques utilisées pour ces évaluations peuvent être de différentes natures.

Dans un mode particulier de réalisation, une heuristique détermine que l'état de sécurité de l'équipement informatique, tel que perçu par ledit contrôleur, représente un risque important de dysfonctionnement dudit équipement informatique, par exemple si une zone mémoire normalement destinée à recevoir une constante du système d'exploitation a été modifiée ou accédée selon un schéma considéré suspect.

Par exemple, un schéma d'accès à une zone mémoire peut être considéré suspect en fonction d'un nombre d'accès, d'une fréquence d'accès, ou d'une variation d'un de ces paramètres.

L'homme du métier sait en particulier que les systèmes d'exploitation habituels (Linux, Windows, ...), ainsi que la plupart des logiciels obtenus par compilation depuis un langage évolué notamment, ont pour habitude d'écrire des données constantes dans certaines zones réservées de la mémoire. Une heuristique peut surveiller ces zones et supposer un état de dysfonctionnement du dispositif informatique dès lors que le contenu de ces zones réservées est modifié ou exploité de manière inhabituelle.

Dans un mode particulier de réalisation, une heuristique utilise une méthode d'apprentissage, par exemple un réseau de neurones pour déterminer, à partir d'une signature du contenu d'au moins une partie d'au moins une mémoire calculée par au moins dite unité de traitement de données, une probabilité que ledit équipement informatique soit dans un état de dysfonctionnement, l'état de sécurité de l'équipement informatique tel que perçu par ledit contrôleur étant déterminé à partir de cette probabilité.

Ce réseau de neurones peut préalablement être entraîné en mode supervisé avec des signatures de contenus de mémoires d'équipements à différents niveaux de dysfonctionnement.

Mais l'évaluation ou la détermination d'un état de sécurité de sécurité de l'équipement informatique ne suffit pas à le sécuriser.

De façon remarquable, l'invention propose, pour déclencher l'arrêt ou le redémarrage du fonctionnement de l'équipement informatique de corrompre au moins une partie de sa mémoire pour placer l'équipement dans un état imprévisible du point de vue du processeur hôte, de sorte à déclencher des actions sécuritaires du processeur hôte.

Dans un mode particulier de réalisation, pour corrompre une mémoire, le contrôleur est configuré bloquer l'accès à ladite mémoire par ledit processeur hôte.

Dans un mode particulier de réalisation, pour corrompre une dite mémoire, ledit contrôleur est configuré pour charger des instructions dans une mémoire d'instructions d'une dite unité de traitement de données pour que celle-ci enregistre une donnée dans une zone de ladite mémoire réservée à un autre usage.

Lorsque le processeur hôte est confronté à l'une ou l'autre situation (accès impossible à la mémoire ou mémoire corrompue), il peut déclencher une action de sécurité consistant à arrêter le fonctionnement du système et à le redémarrer dans un état sain.

L'invention vise également un procédé de sécurisation d'un équipement informatique, ce procédé étant mis en œuvre par un contrôleur embarqué dans un module de sécurisation, ledit contrôleur étant configuré pour contrôler l'accès à une zone de mémoire RAM soit par un processeur hôte via un bus mémoire, soit par une unité de traitement de données via une interface DMA, ledit procédé comportant :
- la mise en œuvre d'au moins une évaluation heuristique d'un état de sécurité de l'équipement informatique, ladite évaluation heuristique comportant :
   (i) le chargement d'instructions dans une mémoire d'instructions de ladite unité de traitement de données pour que celle-ci effectue au moins une opération sur au moins une partie de ladite mémoire;
   (ii) l'obtention d'un résultat de ladite opération ;
   (iii) la détermination dudit état de sécurité à partir dudit résultat
- la corruption de ladite mémoire en fonction dudit état de sécurité pour déclencher un arrêt ou un redémarrage du fonctionnement du processeur hôte de l'équipement informatique.

L'invention vise aussi un équipement informatique, par exemple un objet connecté, comportant un processeur hôte et au moins un module de sécurisation tel que mentionné ci-dessus.

Dans un mode particulier de réalisation, une heuristique est enregistrée de façon certifiée dans une mémoire non volatile dudit contrôleur.

Ce mode de réalisation permet de prévoir une heuristique dite de base qui sera systématiquement exécutée. Elle peut par exemple être préenregistrée dans le micro-logiciel ou firmware du contrôleur de sorte que le module de sécurisation incorpore nativement une solution complète de sécurisation (surveillance de la mémoire, déclenchement d'une action sécuritaire).

Dans un mode particulier de réalisation, le contrôleur est configuré pour recevoir une heuristique du processeur hôte via le canal de contrôle.

Dans un mode particulier de réalisation dans lequel le processeur hôte comporte un environnement d'exécution sécurisé, cette heuristique peut être envoyée par une application certifiée de cet environnement d'exécution sécurisé.

Une signature de cette heuristique effectuée par le processeur hôte ou par une application certifiée de l'environnement sécurisée peut être vérifiée par le contrôleur avant utilisation de cette heuristique.

Cette heuristique peut être préférentiellement exécutée par le contrôleur en complément de l'heuristique de base.

Dans les modes de réalisation de l'invention mentionnés ci-dessus, le contrôleur met en œuvre au moins une heuristique, pour déterminer un état de sécurité de l'équipement informatique tel que perçu par ce contrôleur.

Dans un mode particulier de réalisation, le contrôleur prend aussi en considération un état de sécurité de l'objet informatique tel que perçu par un tiers de confiance.

Ainsi, dans un mode particulier de réalisation, le module de sécurisation est caractérisé en ce que le contrôleur est configuré pour charger des instructions dans une mémoire d'instructions d'une dite unité de traitement de données pour que celle-ci :
- obtienne un jeton dans un registre de la mémoire accessible par cette unité de traitement de données ;
- déchiffre ledit jeton avec une clé publique du tiers de confiance pour obtenir un état de sécurité de l'équipement informatique tel que perçu par ce tiers de confiance ;
- retourne cet état de sécurité audit contrôleur ;
- ledit contrôleur étant configuré pour corrompre ladite mémoire en fonction :
   (i) de l'état de sécurité de l'objet informatique tel que perçu par le contrôleur ; et
   (ii) de l'état de sécurité de l'objet informatique tel que perçu par le tiers de confiance.

Ces jetons envoyés par le tiers de confiance permettent au contrôleur d'obtenir de l'information sur l'environnement de l'équipement informatique. Par exemple, si le contrôleur cesse de recevoir des jetons du tiers de confiance, il peut en déduire un dysfonctionnement de l'équipement informatique et décider de corrompre sa mémoire pour déclencher l'arrêt et éventuellement le redémarrage de son fonctionnement.

Dans un mode particulier de réalisation, le contrôleur est configuré pour charger des d'instructions dans une mémoire d'instructions d'une unité de traitement de données pour que celle-ci :
- obtienne un jeton par chiffrement de l'état de sécurité vu du contrôleur avec une clef publique du tiers de confiance ; et
- enregistre ce jeton dans un registre de la mémoire accessible par cette unité de traitement de données.

Ce mode de réalisation de l'invention permet de remonter au tiers de confiance l'état de sécurité de l'objet connecté vu du contrôleur.

Dans un mode de réalisation, la communication entre le tiers de confiance et l'équipement informatique est assurée par un processus applicatif exécuté par le processeur hôte.

Dans ce mode de réalisation, le processeur hôte est configuré pour exécuter un processus applicatif comportant des instructions pour :
- enregistrer les jetons reçus du tiers de confiance dans un registre d'une dite mémoire, ces jetons étant les états de sécurité de l'équipement informatique perçus par le tiers de confiance et signés par la clé privée dudit tiers de confiance; et pour
- envoyer au tiers de confiance, les jetons lus dans un registre de la mémoire et correspondants à des états de sécurité de l'équipement informatique perçus par ledit contrôleur et signés par la clé publique dudit tiers de confiance.

Dans un mode particulier de réalisation, les différentes étapes du procédé de sécurisation sont déterminées par des instructions de programmes d'ordinateurs ou sont implémentées par une puce en silicium qui comprend des transistors adaptés pour constituer des portes logiques d'une logique câblée non programmable.

En conséquence, l'invention vise aussi un programme d'ordinateur sur un support d'informations, ce programme étant susceptible d'être mis en œuvre dans contrôleur, ce programme comportant des instructions adaptées à la mise en œuvre des étapes d'un procédé de gestion d'urgence tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, une mémoire non volatile de type flash ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
[Fig.1] La [Fig.1] représente de façon schématique un équipement informatique conforme à un mode particulier de réalisation de l'invention;
[Fig.2] La [Fig.2] représente un processeur hôte et un module de sécurisation dans un mode particulier de mise en œuvre de l'invention ;
[Fig.3] La [Fig.3] représente un exemple d'environnement logiciel du processeur hôte dans un mode particulier de mise en œuvre de l'invention ;
[Fig.4] La [Fig.4] représente, sous forme d'organigramme, les principales étapes d'un procédé de sécurisation conforme à un mode particulier de réalisation de l'invention ; et
[Fig.5] La [Fig.5] représente un contrôleur pouvant être utilisé dans un mode particulier de mise en œuvre de l'invention.

### Description des modes de réalisation

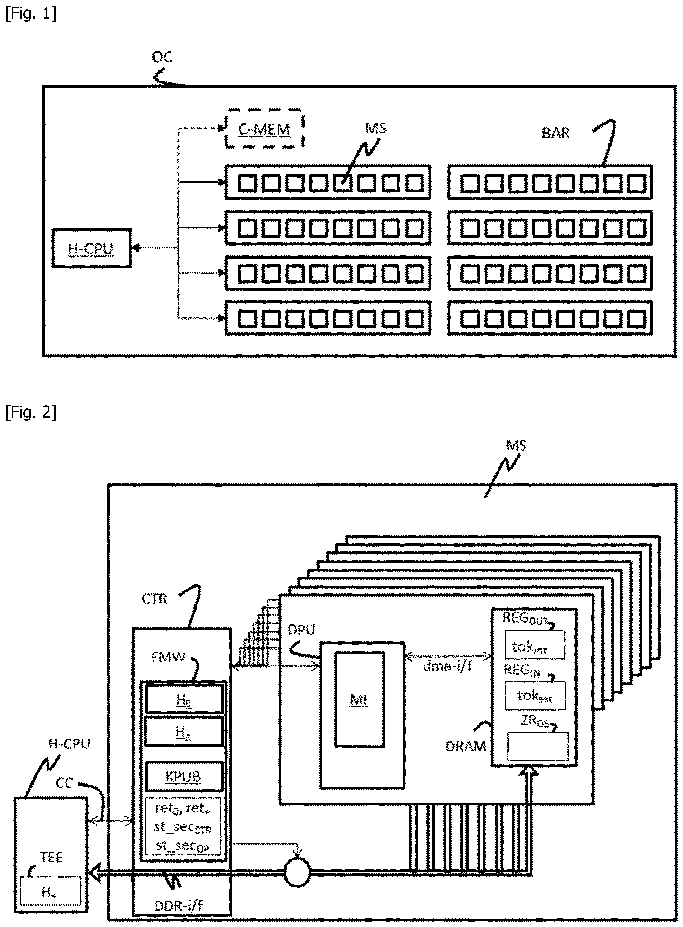

La [Fig.1] représente schématiquement un équipement informatique OC conforme à un mode particulier de mise en œuvre de l'invention, par exemple un objet connecté.

Cet équipement informatique OC comporte un processeur hôte H-CPU configuré pour accéder, via un bus mémoire, à des mémoires de type DRAM (plus simplement appelées DRAMs).

Dans le mode de réalisation décrit ici, le processeur hôte H-CPU accède aux DRAMs en utilisant un protocole DDR.

Le terme « protocole DDR » (en anglais Double Data Rate) est utilisé ici pour désigner un protocole quelconque parmi DDR1, DDR2, DDR3, DDR4, RLDRAM (mémoire à accès aléatoire à latence réduite), RLDRAM2, et tout protocole similaire à ces protocoles.

Dans le mode de réalisation toutes les mémoires DRAM accessibles par le processeur hôte H-CPU sont intégrées dans des modules de sécurisation MS conformes à l'invention.

Dans le mode de réalisation décrit ici, ces modules de sécurisation MS ont une architecture du type de celles des PIM DRAMs (PIM pour, en anglais, « processor in memory ») décrites dans le document FR3032814A1.

En variante, le processeur hôte H-CPU pourrait en outre accéder à une ou plusieurs DRAMs conventionnelles globalement référencées C-MEM et représentée en pointillés sur la [Fig.1].

Dans le mode particulier de réalisation décrit ici, les modules de sécurisation MS sont organisés en barrettes BAR, par exemple au format DIMM (an anglais Dual Inline Memory Module).

Selon le mode de réalisation de l'invention, le processeur hôte H-CPU peut supporter un ou plusieurs canaux de mémoire DDR (4 sont représentés dans l'exemple de la [Fig.1]), chaque canal de mémoire pouvant prendre en charge une ou plusieurs barrettes BAR de modules de sécurisation MS (2 dans l'exemple de la [Fig.1]).

Dans le mode de réalisation décrit ici, chaque barrette BAR comporte un ou plusieurs modules de sécurisation MS, par exemple 8.

La [Fig.2] représente schématiquement le processeur hôte H-CPU et un module de sécurisation MS dans un mode particulier de réalisation de l'invention.

Dans ce mode de réalisation, le module de sécurisation MS comporte :
- une interface DDR référencée DDR-i/f ;
- un contrôleur CTR configuré pour recevoir des commandes du processeur hôte H-CPU via un canal de contrôle CC; et
- une pluralité (8 dans l'exemple de la [Fig.2]) d'unités de traitement de données, ci-après DPU (en anglais Data Processing Unit), chaque DPU étant configuré pour accéder à une mémoire DRAM via une interface DMA (en anglais Direct Memory Access) référencée dma-i/f.

Dans le mode de réalisation décrit ici, l'interface DDR-i/f est commune à toutes les DRAMs, de sorte que ces mémoires DRAM sont également accessibles par le processeur hôte H-CPU via l'interface DDR-i/f.

Une quelconque de ces mémoires DRAM est donc partagée entre le processeur hôte H-CPU (via l'interface DDR) et le DPU (via l'interface DMA). Le contrôleur CTR gère le contrôle à ces mémoires DRAM de manière à empêcher un accès simultané à une plage de mémoire à la fois par le processeur hôte H-CPU et par le DPU associé à cette mémoire.

Le contrôleur CTR n'a pas d'accès direct aux mémoires DRAM mais il est configuré pour pouvoir demander à un DPUs d'exécuter des instructions pour lire ou pour écrire dans la DRAM associé à ce DPU.

Le contrôleur CTR peut également demander à un DPU d'effectuer d'autres calculs, notamment des calculs de chiffrement et de déchiffrement des jetons mentionnés précédemment.

A cet effet, chaque DPU comporte une mémoire d'instructions MI, de taille relativement réduite, typiquement 24ko.

Le seul environnement connu d'un DPU est sa propre DRAM. Il opère uniquement sur ordre du contrôleur CTR.

Conformément à l'invention, le contrôleur CTR est configuré pour s'appuyer sur les DPUs afin de sécuriser l'exécution de l'équipement informatique OC. En ce sens, le contrôleur CTR peut être considéré comme un coprocesseur de sécurité du processeur hôte H-CPU.

Dans le mode de réalisation décrit ici, le contrôleur CTR comporte un logiciel embarqué FMW (en anglais firmware) avec une mémoire dédiée à ce contrôleur.

Dans le mode de réalisation décrit ici, ce firmware FMW comporte une heuristique H ₀de base pour permettre au contrôleur CTR d'évaluer un état de sécurité st_sec_{CTR} de l'équipement informatique OC, tel que perçu par le contrôleur, sur la base des variations du contenu d'au moins une partie d'au moins une DRAM.

Dans le mode de réalisation décrit ici, le contrôleur CTR est configuré pour recevoir du processeur hôte H-CPU au moins une heuristique H_{+,} complémentaire de l'heuristique de base H₀, pour lui permettre d'affiner cet état de sécurité st_sec_{CTR} sur la base des variations du contenu d'au moins une partie d'au moins une DRAM. Cette heuristique complémentaire H₊ est par exemple reçue d'un environnement d'exécution sécurisé TEE du processeur hôte H-CPU (en anglais Trusted Execution Environment).

Le contrôleur CTR n'ayant pas accès direct aux DRAMs, il utilise, pour mettre en œuvre l'une ou l'autre de ces heuristiques H₀, H₊, les services des DPU ayant accès à ces DRAMs.

Plus précisément, pour mettre en œuvre une heuristique H_{i, i=0,+,} le contrôleur CTR est configuré pour charger dans la mémoire d'instructions MI d'un DPU, par blocs de 24 ko maximum dans cet exemple, les instructions de cette heuristique Hᵢ pour que ce DPU les exécute et lui retourne un résultat retᵢ de cette exécution.

Ces instructions peuvent être de différentes natures. Elles peuvent être des instructions pour que le DPU retourne simplement au contrôleur CTR le contenu d'une partie de la DRAM accessible par ce DPU ou une valeur calculée à partir d'une partie du contenu de la DRAM accessible par ce DPU.

Le contrôleur CTR est configuré pour évaluer un état de sécurité st_sec_{CTR} de l'équipement informatique OC, sur la base d'une ou plusieurs valeurs retᵢ retournées par un ou plusieurs DPU. On dira que cet état de sécurité est un état de sécurité tel que perçu par le contrôleur CTR.

Dans un mode de réalisation, le contrôleur CTR est configuré pour demander à un DPU de chiffrer l'état de sécurité st_sec_{CTR} du dispositif informatique OC, tel que perçu par le contrôleur CTR, avec une clé publique KPUB d'un tiers de confiance OP pour générer un jeton tokᵢₙₜ, et pour demander à un DPU d'enregistrer ce jeton tokᵢₙₜ dans un registre REG_{OUT} de sa DRAM.

Dans un mode de réalisation, le contrôleur CTR est configuré pour demander à un DPU de déchiffrer un jeton tokₑₓₜ compris dans un registre REG_{IN} de sa DRAM avec cette clé publique KPUB et de lui fournir le résultat st_sec_{OP} de ce déchiffrement, ce résultat étant représentatif d'un état de sécurité de l'équipement informatique OC tel que perçu par ce tiers de confiance OP.

Dans un mode de réalisation de l'invention, le contrôleur CTR est configuré pour décider à partir de l'état de sécurité st_sec_{CTR} de l'équipement informatique OC tel que perçu par le contrôleur CTR et/ou à partir de l'état de sécurité st_sec_{OP} de l'équipement informatique OC tel perçu par le tiers de confiance OP, s'il doit mettre en œuvre une action ACT de corruption d'au moins une DRAM pour entraîner un arrêt ou un redémarrage du fonctionnement de l'équipement informatique OC.

Dans un mode de réalisation de l'invention, le contrôleur CTR est configuré pour corrompre par lui-même une DRAM en bloquant les accès à cette DRAM par le processeur hôte H-CPU.

Dans un mode de réalisation de l'invention, le contrôleur CTR est configuré pour demander à un DPU d'écrire dans une zone déterminée ZR_{OS} de sa DRAM, par exemple une zone réservée à la mémorisation de constantes du système d'exploitation OS, de façon à corrompre cette DRAM pour entraîner un arrêt ou un redémarrage du fonctionnement de l'équipement informatique OC.

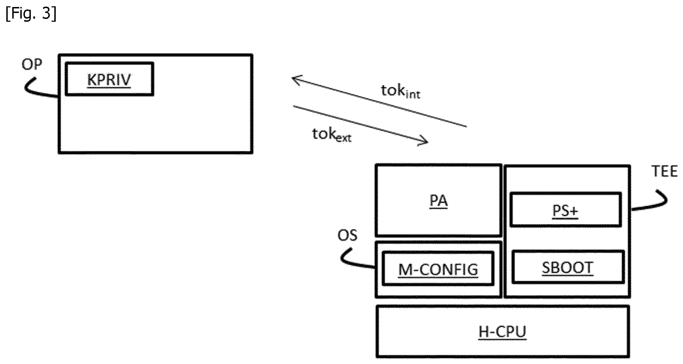

La [Fig.3] représente schématiquement un exemple de l'environnement logiciel du processeur hôte H-CPU dans un mode particulier de mise en œuvre de l'invention.

Sur cette figure on a représenté un processus applicatif PA. Dans le mode de réalisation décrit ici, ce processus applicatif est configuré pour communiquer avec un opérateur OP d'un réseau auquel est connecté l'équipement informatique OC, cet opérateur constituant un tiers de confiance au sens de l'invention.

Dans le mode de réalisation décrit ici, l'équipement informatique OC comporte un système d'exploitation OS, par exemple de type Linux, comportant notamment un module M-CONFIG de configuration et de gestion de la mémoire DRAM accessible par le processeur hôte H-CPU.

Dans le mode de réalisation décrit ici, l'environnement du processeur hôte H-CPU comporte un environnement d'exécution sécurisé TEE.

Dans le mode de réalisation décrit ici, le tiers de confiance OP est configuré pour envoyer au processus applicatif PA, par exemple régulièrement, un jeton tokₑₓₜ comportant un état de sécurité st_sec_{OP} de l'équipement informatique OC tel que perçu par le tiers de confiance OP, ce jeton étant signé avec une clé privée KPRIV du tiers de confiance OP associée à la clé publique KPUB enregistrée dans une mémoire non volatile du contrôleur CTR du module de sécurisation MS.

Dans le mode de réalisation décrit ici, le processus applicatif PA enregistre ce jeton tokₑₓₜ dans un registre REG_{IN} de la DRAM, cette écriture se faisant par le processeur hôte H-CPU via l'interface DDR.

Dans le mode de réalisation décrit ici, le processus applicatif PA est configuré pour lire, via l'interface DDR, par exemple régulièrement, le jeton tokᵢₙₜ chiffré par la clé publique du tiers de confiance OP contenu dans le registre REG_{OUT} de la DRAM et pour envoyer ce jeton au tiers de confiance OP. Le tiers de confiance OP est configuré pour déchiffrer ce jeton tokᵢₙₜ avec sa clé privée KPRIV de sorte à obtenir l'état de sécurité st_sec_{CTR} du dispositif informatique OC perçu par le contrôleur CTR.

Le tiers de confiance OP peut utiliser cette information st_sec_{CTR} pour modifier sa perception st_sec_{OP} de l'état de sécurité de l'équipement informatique OC, ce nouvel état envoyé sous forme d'un jeton signé tokₑₓₜ au processus applicatif PA.

Dans le mode de réalisation décrit ici, l'environnement d'exécution sécurisé TEE du processeur hôte H-CPU offre un service SBOOT pour fournir, au moment du démarrage de l'équipement informatique OC, l'heuristique H₊ au contrôleur CTR d'au moins un module de sécurisation MS.

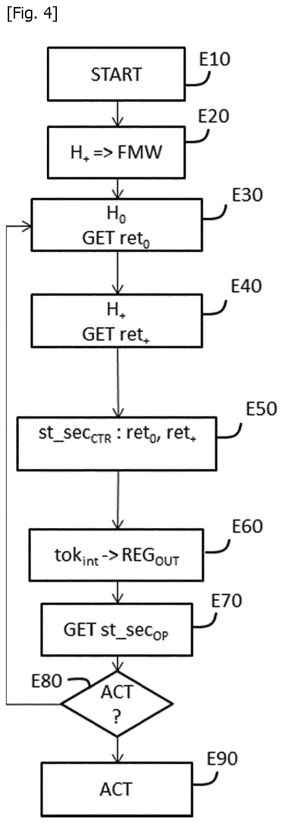

La [Fig.4] représente les principales étapes d'un procédé de sécurisation mis en œuvre par le contrôleur CTR du dispositif de sécurisation MS.

Au cours d'une étape E10 du démarrage de l'objet connecté (procédure de boot), le contrôleur CTR est configuré par le processeur hôte H-CPU via le canal de contrôle CC.

Dans le mode de réalisation décrit ici, le contrôleur CTR reçoit de l'environnement d'exécution sécurisé, au cours d'une étape E20, l'heuristique H₊ d'analyse complémentaire de la DRAM. Il l'enregistre dans une mémoire non volatile.

Dans le mode de réalisation décrit ici, le contrôleur CTR exécute ensuite une boucle comportant :
- une étape E30 d'exécution de l'heuristique de base H₀ installée dans le firmware FMW à partir du contenu d'au moins une partie d'au moins une DRAM, d'une évolution de ce contenu, ou d'un schéma d'accès à ce contenu. Cette étape comporte le chargement par le contrôleur CTR d'instruction de cette heuristique dans la mémoire d'instructions MI du DPU associé à cette DRAM pour que le DPU analyse cette DRAM et retourne au contrôleur CTR le résultat ret₀ de cette analyse ;
- une étape optionnelle E40 d'exécution de l'heuristique complémentaire H₊, cette étape étant similaire à l'étape E30 ;
- une étape E50 d'obtention de l'état st_sec_{CTR} de sécurité de l'objet connecté vu du contrôleur CTR à partir des résultats ret₀ et ret₊ reçus des DPUs pour l'exécution des heuristiques H₀ et H₊ ;
- une étape E60 de contrôle d'au moins un DPU pour qu'il chiffre l'état st_sec_{CTR} avec la clé publique KPUB du tiers de confiance OP pour obtenir un jeton tokᵢₙₜ et pour qu'il enregistre ce jeton tokᵢₙₜ dans le registre REG_{OUT} de sa DRAM;
- une étape E70 de contrôle d'au moins un DPU pour qu'il vérifie la signature, à l'aide de la clé publique KPUB, du jeton tokₑₓₜ contenu dans le registre REG_{IN} de la DRAM et qu'il lui communique le résultat de cette vérification, celui-ci correspondant au dernier état de sécurité st_sec_{OP} de l'équipement informatique OC tel que perçu par le tiers de confiance OP ;
- une étape E80 de décision de mettre en œuvre ou non une action de corruption d'au moins une DRAM pour entraîner un arrêt ou un redémarrage du fonctionnement de l'équipement informatique OC en fonction des états de sécurité st_sec_{CTR}, st_sec_{OP} de l'objet connecté OC vus respectivement du contrôleur CTR et du tiers de confiance OP ; et
- une étape E90 de mise en œuvre d'au moins une action de corruption d'au moins une DRAM en fonction du résultat de l'étape E80 de décision.

Les heuristiques H₀ et H₊ d'analyse d'au moins une partie de la DRAM peuvent être de différentes natures. Elles visent d'une façon générale à obtenir un état de sécurité st_sec_{CTR} de l'équipement informatique OC tel que perçu par le contrôleur CTR au vu du contenu d'au moins une partie d'au moins une DRAM.

Par exemple, l'heuristique de base H₀ considère que l'état de sécurité st_sec_{CTR} de l'équipement informatique doit représenter un risque important de dysfonctionnement (sécurité faible) si une zone mémoire d'une DRAM normalement destinée à recevoir une constante du système d'exploitation OS a été modifiée.

Par exemple, l'heuristique complémentaire H₊ utilise une méthode d'apprentissage, par exemple de régression statistique, pour déterminer, à partir d'une signature du contenu d'au moins une partie d'au moins une DRAM calculée par au moins un DPU, une probabilité que cet équipement informatique OC soit dans un état de dysfonctionnement, l'état de sécurité st_sec_{CTR} de l'équipement informatique OC, vu du contrôleur CTR étant déterminé à partir de cette probabilité.

Dans le mode de réalisation décrit ici, à l'étape E80, le contrôleur CTR détermine à partir:
- de l'état de sécurité st_sec_{CTR} de l'équipement informatique OC tel que perçu par le contrôleur CTR ; et
- de l'état de sécurité st_sec_{OP} de l'équipement informatique OC tel que perçu par le tiers de confiance OP,
s'il convient de corrompre au moins une DRAM pour entraîner un arrêt et éventuellement un redémarrage du fonctionnement de l'équipement informatique OC.

Dans un mode de réalisation, le contrôleur CTR donne plus de poids (80/20) à l'état de sécurité st_sec_{CTR} de l'équipement informatique OC tel que perçu par le contrôleur CTR il déclenche une telle action si 0.8. st_sec_{CTR} + 0.2. st_sec_{OP} est supérieur à un seuil prédéterminé.

Dans un autre mode de réalisation, le contrôleur CTR utilise la logique suivante :
- si l'état de sécurité st_sec_{CTR} est supérieur à un premier seuil (probabilité de dysfonctionnement important selon la perception du contrôleur CTR),
- attendre la réception de n jetons tokₑₓₜ pour laisser au tiers de confiance OP le temps d'envoyer, sous forme d'un jeton tokₑₓₜ, un état de sécurité st_sec_{OP} requérant un arrêt et éventuellement un redémarrage d'urgence,
- si ces n jetons ne sont pas reçus pendant une durée prédéterminée, ou si un de ces jetons porteur d'une demande d'arrêt d'urgence reçu, alors déclencher l'action de corruption d'au moins une DRAM pour entraîner un arrêt du fonctionnement de l'équipement informatique OC.

Si le contrôleur CTR décide de mettre en œuvre une ou plusieurs actions pour déclencher l'arrêt de l'objet connecté OC, celle-ci est mise en œuvre au cours d'une étape E90.

Cette étape E90 peut notamment consister à :
- empêcher l'accès à une mémoire DRAM par le processeur hôte H-CPU, ou
- à demander à un DPU décrire dans une zone réservée ZR_{OS} de la mémoire DRAM, par exemple à une zone dans laquelle le système d'exploitation OS stocke normalement des constantes.

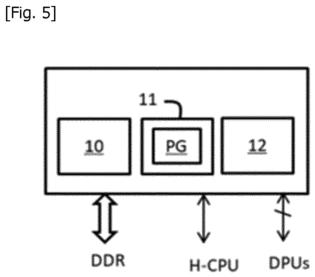

La [Fig.5] représente l'architecture matérielle d'un contrôleur CTR pouvant être utilisé dans un module de sécurisation MS conforme à l'invention. Dans le mode de réalisation décrit ici, le contrôleur CTR comprend notamment un processeur 10, une mémoire non volatile 11, une mémoire vive 12, une interface DDR, un port P de communication avec un processeur hôte H-CPU et une interface de contrôle des DPUs.

La mémoire non volatile 11 constitue un support d'enregistrement conforme à l'invention, lisible par le processeur 10 et sur lequel est enregistré un programme d'ordinateur PG conforme à l'invention, ce programme comportant des instructions pour l'exécution des étapes d'un procédé de sécurisation selon l'invention dont les principales ont été décrites en référence à la [Fig.4] dans un mode de réalisation.

La mémoire non volatile 11 peut être utilisée pour mémoriser la clé publique KPUB du tiers de confiance OP, le firmware FMW et les heuristiques.

## Revendications

1. Module de sécurisation (MS) d'un équipement informatique (OC), ce module comportant :
- au moins une mémoire RAM accessible par un processeur hôte (H-CPU) externe audit module de sécurisation (MS), via un bus mémoire ;
- un contrôleur (CTR) configuré pour pouvoir être programmé par le processeur hôte (H-CPU) via un canal de contrôle (CC) ;
- des unités de traitement de données (DPU) configurées pour pouvoir accéder à des zones de ladite mémoire via une interface DMA, lesdites unités de traitement de données (DPU) étant contrôlées par ledit contrôleur (CTR);
- ledit contrôleur (CTR) étant configuré pour contrôler l'accès à ladite mémoire soit par le processeur hôte (H-CPU) soit par lesdites unités de traitement de données (DPU) ;
- ledit contrôleur (CTR) étant configuré pour mettre en œuvre au moins une évaluation heuristique d'un état de sécurité (st_sec_{CTR}) de l'équipement informatique (OC) tel que perçu par ledit contrôleur (CTR), ladite évaluation heuristique comportant :
(i) le chargement d'instructions dans une mémoire d'instructions (MI) de ladite unité de traitement de données (DPU) pour que celle-ci effectue au moins une opération sur au moins une partie de ladite mémoire ;
(ii) l'obtention d'un résultat (ret₀, ret₊) de ladite opération ;
(iii) la détermination dudit état de sécurité (st_sec_{CTR}) à partir dudit résultat
- ledit contrôleur (CTR) étant configuré pour corrompre ladite mémoire en fonction dudit état de sécurité (st_sec_{CTR}) pour déclencher un arrêt ou un redémarrage du fonctionnement dudit processeur hôte (H-CPU) dudit équipement informatique (OC).

2. Module de sécurisation (MS) selon la revendication 1, **caractérisé en ce que** ladite évaluation heuristique comporte une heuristique (H₀) enregistrée de façon certifiée dans une mémoire non volatile (11) dudit contrôleur (CTR).

3. Module de sécurisation (MS) selon la revendication 1 ou 2, **caractérisé en ce que** ledit contrôleur (CTR) est configuré pour recevoir une dite heuristique (H₊) dudit processeur hôte (H-CPU) via ledit canal de contrôle (CC), ladite heuristique (H₊) étant utilisée pour ladite au moins une évaluation heuristique.

4. Module de sécurisation (MS) selon l'une quelconque des revendications 1 à 3, **caractérisé en ce que** ledit contrôleur (CTR) est configuré pour charger des d'instructions dans une mémoire d'instructions (MI) d'une dite unité de traitement de données (DPU) pour que celle-ci :
- obtienne un jeton (tokₑₓₜ) dans un registre (REG_{IN}) de la mémoire accessible par cette unité de traitement de données (DPU) ;
- vérifie une signature dudit jeton (tokₑₓₜ) avec une clé publique d'un tiers de confiance (OP) pour obtenir un état de sécurité (st_sec_{OP}) de l'équipement informatique (OC) tel que perçu par ledit tiers de confiance (OP) ;
- retourne cet état de sécurité (st_sec_{OP}) audit contrôleur (CTR) ;
- ledit contrôleur (CTR) étant configuré pour corrompre ladite mémoire en fonction :
(i) de l'état de sécurité (st_sec_{CTR}) de l'objet informatique tel que perçu par le contrôleur (CTR) ; et
(ii) de l'état de sécurité (st_sec_{OP}) de l'objet informatique tel que perçu par le tiers de confiance.

5. Module de sécurisation (MS) selon l'une quelconque des revendications 1 à 4, **caractérisé en ce que** ledit contrôleur (CTR) est configuré pour charger des d'instructions dans une mémoire d'instructions (MI) d'une dite unité de traitement de données (DPU) pour que celle-ci :
- obtienne un jeton (tokᵢₙₜ) par chiffrement dudit état de sécurité (st_sec _{CTR}) tel que perçu par ledit contrôleur (CTR) avec une clef publique (KPUB) d'un tiers de confiance (OP) ; et
- enregistre ledit jeton (tokᵢₙₜ) dans un registre (REG_{OUT}) de la mémoire accessible par cette unité de traitement de données (DPU).

6. Module de sécurisation (MS) selon l'une quelconque des revendications 1 à 5, **caractérisé en ce que**, pour corrompre une dite mémoire, ledit contrôleur (CTR) est configuré pour bloquer l'accès à ladite mémoire par ledit processeur hôte.

7. Module de sécurisation (MS) selon l'une quelconque des revendications 1 à 6, **caractérisé en ce que**, pour corrompre une dite mémoire, ledit contrôleur (CTR) est configuré pour charger des d'instructions dans une mémoire d'instructions (MI) d'une dite unité de traitement de données (DPU) pour que celle-ci enregistre une donnée dans une zone (ZR_{OS}) de ladite mémoire réservée à un autre usage.

8. Module de sécurisation (MS) selon l'une quelconque des revendications 1 à 7, **caractérisé en ce que** ladite au moins une heuristique détermine que l'état de sécurité (st_sec_{CTR}) de l'équipement informatique (OC) tel que perçu par ledit contrôleur (CTR), doit représenter un risque important de dysfonctionnement dudit équipement informatique si une zone d'une dite mémoire normalement destinée à recevoir une constante du système d'exploitation (OS) a été modifiée ou accédée selon un schéma considéré suspect.

9. Module de sécurisation (MS) selon l'une quelconque des revendications 1 à 8, **caractérisé en ce que** ladite au moins une heuristique utilise une méthode d'apprentissage pour déterminer, à partir d'une signature du contenu d'au moins une partie d'au moins une mémoire calculée par au moins une dite unité de traitement de données (DPU), une probabilité que ledit équipement informatique (OC) soit dans un état de dysfonctionnement, l'état de sécurité (st_sec_{CTR}) de l'équipement informatique (OC) tel que perçu par ledit contrôleur (CTR) étant déterminé à partir de cette probabilité.

10. Procédé de sécurisation (MS) d'un équipement informatique (OC), ce procédé étant mis en œuvre par un contrôleur (CTR) embarqué dans un module de sécurisation (MS), ledit contrôleur étant configuré pour contrôler l'accès à une zone de mémoire RAM soit par un processeur hôte (H-CPU) via un bus mémoire, soit par une unité de traitement de données (DPU) via une interface DMA, ledit précédé comportant :
- la mise en œuvre d'au moins une évaluation heuristique d'un état de sécurité (st_sec_{CTR}) de l'équipement informatique (OC), ladite évaluation heuristique (H₀, H₊) comportant :
(i) le chargement (E30, E40) d'instructions dans une mémoire d'instructions (MI) de ladite unité de traitement de données (DPU) pour que celle-ci effectue au moins une opération sur au moins une partie de ladite mémoire ;
(ii) l'obtention (E30, E40) d'un résultat (ret₀, ret₊) de ladite opération ;
(iii) la détermination (E50) dudit état de sécurité (st_sec_{CTR}) à partir dudit résultat
- la corruption (E80) de ladite mémoire en fonction dudit état de sécurité (st_sec_{CTR}) pour déclencher un arrêt ou un redémarrage du fonctionnement dudit processeur hôte (H-CPU) dudit équipement informatique (OC).

11. Equipement informatique (OC) comportant un processeur hôte (H-CPU) et au moins un module de sécurisation (MS) selon l'une quelconque des revendications 1 à 9.

12. Equipement informatique (OC) selon la revendication 11, ledit processeur hôte (H-CPU) comportant un environnement d'exécution sécurisé (TEE) configuré pour envoyer une heuristique (H₊) utilisée pour ladite évaluation heuristique audit contrôleur (CTR) via ledit canal de contrôle (CC).

13. Equipement informatique (OC) selon la revendication 11 ou 12, ledit module de sécurisation (MS) étant selon les revendications 4 et 5, ledit processeur hôte (H-CPU) étant configuré pour exécuter un processus applicatif (PA) comportant des instructions pour :
- enregistrer des jetons (tokₑₓₜ) reçus d'un tiers de confiance (OP) dans un registre (REG_{OUT}) d'une dite mémoire, ces jetons (tokₑₓₜ) étant lesdits états de sécurité (st_sec_{OP}) de l'équipement informatique (OC) perçus par ledit tiers de confiance (OP) et signés par la clé privée (KPRIV) dudit tiers de confiance ;; et pour
- envoyer audit tiers de confiance (OP), des jetons (tokᵢₙₜ) lus dans un registre (REG_{IN}) d'une dite mémoire et correspondants à des états de sécurité (st_sec_{CTR}) de l'équipement informatique (OC) perçus par ledit contrôleur chiffrés par la clé publique (KPUB) dudit tiers de confiance.

14. Programme d'ordinateur (PG) comportant des instructions qui, lorsque le programme est exécuté par un ordinateur, conduisent celui-ci à mettre en oeuvre l'exécution des étapes du procédé de sécurisation selon la revendication 10.

15. Support d'information (14) lisible par un contrôleur (CTR) et comportant des instructions d'un programme d'ordinateur qui, lorsqu'elles sont exécutées par un ordinateur, conduisent celui-ci à mettre en oeuvre le procédé de sécurisation selon la revendication 10.

## Patentansprüche

1. Modul zur Sicherung (MS) einer Computervorrichtung (OC), dieses Modul umfassend:
- mindestens einen RAM-Speicher, auf den ein Host-Prozessor (H-CPU) außerhalb des Moduls zur Sicherung (MS) über einen Speicherbus zugreifen kann;
- eine Steuereinheit (CTR), der so konfiguriert ist, dass er von dem Host-Prozessor (H-CPU) über einen Steuerkanal (CC) programmiert werden kann;
- Datenverarbeitungseinheiten (DPU), die so konfiguriert sind, dass sie über eine DMA-Schnittstelle auf Bereiche des Speichers zugreifen können, wobei die Datenverarbeitungseinheiten (DPU) von der Steuereinheit (CTR) gesteuert werden;
- wobei die Steuereinheit (CTR) so konfiguriert ist, dass sie den Zugriff auf den Speicher entweder durch den Host-Prozessor (H-CPU) oder durch die Datenverarbeitungseinheiten (DPU) steuert;
- wobei die Steuereinheit (CTR) so konfiguriert ist, dass sie mindestens eine heuristische Bewertung eines Sicherheitsstatus (st_sec_{CTR}) der Computervorrichtung (OC), wie er von der Steuereinheit (CTR) wahrgenommen wird, durchführt, die heuristische Bewertung umfassend:
(i) das Laden von Befehlen in einen Befehlsspeicher (MI) der Datenverarbeitungseinheit (DPU), damit diese mindestens einen Vorgang an mindestens einem Teil des Speichers ausführt;
(ii) das Erhalten eines Ergebnisses (ret₀, ret₊) des Vorgangs;
(iii) das Bestimmen des Sicherheitsstatus (st_sec_{CTR}) anhand des Ergebnisses
- wobei die Steuereinheit (CTR) so konfiguriert ist, dass sie den Speicher in Abhängigkeit von dem Sicherheitsstatus (st_sec_{CTR}) angreift, um ein Anhalten oder einen Neustart des Betriebs des Host-Prozessors (H-CPU) der Computervorrichtung (OC) auszulösen.

2. Modul zur Sicherung (MS) nach Anspruch 1, **dadurch gekennzeichnet, dass** die heuristische Bewertung eine Heuristik (H₀) umfasst, die in einem nichtflüchtigen Speicher (11) der Steuereinheit (CTR) zertifiziert gespeichert ist.

3. Modul zur Sicherung (MS) nach Anspruch 1 oder 2, **dadurch gekennzeichnet, dass** die Steuereinheit (CTR) so konfiguriert ist, dass sie eine Heuristik (H₊) von dem Host-Prozessor (H-CPU) über den Steuerkanal (CC) empfängt, wobei die Heuristik (H₊) für die mindestens eine heuristische Bewertung verwendet wird.

4. Modul zur Sicherung (MS) nach einem der Ansprüche 1 bis 3, **dadurch gekennzeichnet, dass** die Steuereinheit (CTR) so konfiguriert ist, dass sie Befehle in einen Befehlsspeicher (MI) einer Datenverarbeitungseinheit (DPU) lädt, damit diese:
- ein Token (tokₑₓₜ) in einem Verzeichnis (REG_{IN}) des Speichers, auf den diese Datenverarbeitungseinheit (DPU) zugreifen kann, erhält;
- eine Signatur des Tokens (tokₑₓₜ) mit einem öffentlichen Schlüssel eines vertrauenswürdigen Dritten (OP) überprüft, um einen Sicherheitsstatus (st_sec_{OP}) der Computervorrichtung (OC) zu erhalten, wie er von dem vertrauenswürdigen Dritten (OP) wahrgenommen wird;
- diesen Sicherheitsstatus (st_sec_{OP}) an die Steuereinheit (CTR) zurückgibt;
- wobei die Steuereinheit (CTR) so konfiguriert ist, dass sie den Speicher angreift, in Abhängigkeit von:
(i) dem Sicherheitsstatus (st_sec_{CTR}) des Computerobjekts, wie er von der Steuereinheit (CTR) wahrgenommen wird, und
(ii) dem Sicherheitsstatus (st_sec_{OP}) des Computerobjekts, wie er von dem vertrauenswürdigen Dritten wahrgenommen wird.

5. Modul zur Sicherung (MS) nach einem der Ansprüche 1 bis 4, **dadurch gekennzeichnet, dass** die Steuereinheit (CTR) so konfiguriert ist, dass sie Befehle in einen Befehlsspeicher (MI) einer Datenverarbeitungseinheit (DPU) lädt, damit diese:
- ein Token (tokᵢₙₜ) durch Verschlüsselung des Sicherheitsstatus (st_sec_{CTR}) , wie er von der Steuereinheit (CTR) wahrgenommen wird, mit einem öffentlichen Schlüssel (KPUB) eines vertrauenswürdigen Dritten (OP) erhält; und
- das Token (tokᵢₙₜ)in einem Verzeichnis (REG_{OUT}) des Speichers, auf den diese Datenverarbeitungseinheit (DPU) zugreifen kann, speichert.

6. Modul zur Sicherung (MS) nach einem der Ansprüche 1 bis 5, **dadurch gekennzeichnet, dass** die Steuereinheit (CTR) zum Angreifen eines Speichers so konfiguriert ist, dass sie den Zugriff auf den Speicher durch den Host-Prozessor blockiert.

7. Modul zur Sicherung (MS) nach einem der Ansprüche 1 bis 6, **dadurch gekennzeichnet, dass** die Steuereinheit (CTR) zum Angreifen eines Speichers so konfiguriert ist, dass sie Befehle in einen Befehlsspeicher (MI) einer Datenverarbeitungseinheit (DPU) lädt, damit diese Daten in einem Bereich (ZR_{OS}) des Speichers speichert, der für eine andere Verwendung reserviert ist.

8. Modul zur Sicherung (MS) nach einem der Ansprüche 1 bis 7, **dadurch gekennzeichnet, dass** die mindestens eine Heuristik bestimmt, dass der Sicherheitsstatus (st_sec_{CTR}) der Computervorrichtung (OC), wie er von der Steuereinheit (CTR) wahrgenommen wird, ein erhebliches Risiko einer Fehlfunktion der Computervorrichtung darstellt, wenn ein Bereich eines Speichers, der normalerweise zur Aufnahme einer Konstante des Betriebssystems (OS) vorgesehen ist, nach einem als verdächtig eingestuften Schema geändert oder darauf zugegriffen wurde.

9. Modul zur Sicherung (MS) nach einem der Ansprüche 1 bis 8, **dadurch gekennzeichnet, dass** die mindestens eine Heuristik eine Lernmethode verwendet, um anhand einer Signatur des Inhalts mindestens eines Teils mindestens eines Speichers, die von mindestens einer der Datenverarbeitungseinheiten (DPU) berechnet wird, eine Wahrscheinlichkeit zu bestimmen, dass sich die Computervorrichtung (OC) in einem Fehlerstatus befindet, wobei der Sicherheitsstatus (st_sec_{CTR}) der Computervorrichtung (OC), wie er von der Steuereinheit (CTR) wahrgenommen wird, anhand dieser Wahrscheinlichkeit bestimmt wird.

10. Verfahren zur Sicherung (MS) einer Computervorrichtung (OC), wobei dieses Verfahren von einer in einem Modul zur Sicherung (MS) eingebauten Steuereinheit (CTR) durchgeführt wird, wobei die Steuereinheit so konfiguriert ist, dass sie den Zugriff auf einen RAM-Speicherbereich entweder durch einen Host-Prozessor (H-CPU) über einen Speicherbus oder durch eine Datenverarbeitungseinheit (DPU) über eine DMA-Schnittstelle steuert, das Verfahren umfassend:
- die Durchführung mindestens einer heuristischen Bewertung eines Sicherheitsstatus (st_sec_{CTR}) der Computervorrichtung (OC), die heuristische Bewertung (H₀, H₊) umfassend:
(i) das Laden (E30, E40) von Befehlen in einen Befehlsspeicher (MI) der Datenverarbeitungseinheit (DPU), damit diese mindestens einen Vorgang an mindestens einem Teil des Speichers ausführt;
(ii) das Erhalten (E30, E40) eines Ergebnisses (ret₀, ret₊) des Vorgangs;
(iii) das Bestimmen (E50) des Sicherheitsstatus (st_sec_{CTR}) anhand des Ergebnisses
- das Angreifen (E80) des Speichers in Abhängigkeit des Sicherheitsstatus (st_sec_{CTR}), um ein Anhalten oder einen Neustart des Betriebs des Host-Prozessors (H-CPU) der Computervorrichtung (OC) auszulösen.

11. Computervorrichtung (OC), umfassend einen Host-Prozessor (H-CPU) und mindestens ein Modul zur Sicherung (MS) nach einem der Ansprüche 1 bis 9.

12. Computervorrichtung (OC) nach Anspruch 11, wobei der Host-Prozessor (H-CPU) eine sichere Ausführungsumgebung (TEE) umfasst, die so konfiguriert ist, dass sie eine für die heuristische Bewertung verwendete Heuristik (H₊) über den Steuerkanal (CC) an die Steuereinheit (CTR) sendet.

13. Computervorrichtung (OC) nach Anspruch 11 oder 12, wobei das Modul zur Sicherung (MS) nach den Ansprüchen 4 und 5 ist, wobei der Host-Prozessor (H-CPU) so konfiguriert ist, dass er einen Anwendungsprozess (PA) ausführt, der Befehle umfasst, die:
- Token (tokₑₓₜ), die von einem vertrauenswürdigen Dritten (OP) empfangen werden, in einem Verzeichnis (REG_{OUT}) eines Speichers speichern, wobei diese Token (tokₑₓₜ) die von dem vertrauenswürdigen Dritten (OP) wahrgenommenen Sicherheitsstatus (st_sec_{OP}) der Computervorrichtung (OC) sind und mit dem privaten Schlüssel (KPRIV) des vertrauenswürdigen Dritten signiert sind; und die
- an den vertrauenswürdigen Dritten (OP) Token (tokᵢₙₜ) senden, die in einem Verzeichnis (REG_{IN}) eines Speichers gelesen wurden und den Sicherheitsstatus (st_sec_{CTR}) der von der Steuereinheit wahrgenommenen Computervorrichtung (OC) entsprechen, die mit dem öffentlichen Schlüssel (KPUB) des vertrauenswürdigen Dritten verschlüsselt wurden.

14. Computerprogramm (PG), umfassend Befehle, die, wenn das Programm von einem Computer ausgeführt wird, diesen veranlassen, die Ausführung der Schritte des Sicherheitsverfahrens nach Anspruch 10 durchzuführen.

15. Von einer Steuereinheit (CTR) lesbarer Informationsträger (14), umfassend Befehle eines Computerprogramms, die bei Ausführung durch einen Computer diesen veranlassen, das Sicherheitsverfahren nach Anspruch 10 durchzuführen.

## Claims

1. Module (MS) for securing a computer equipment (OC), this module comprising:
- at least one RAM which can be accessed by a host processor (H-CPU) which is external to said securing module (MS), via a memory bus;
- a controller (CTR) configured to be able to be programmed by the host processor (H-CPU) via a control channel (CC);
- data processing units (DPU) configured to be able to access areas of said memory via a DMA interface, said data processing units (DPU) being controlled by said controller (CTR);
- said controller (CTR) being configured to control access to said memory either by the host processor (H-CPU) or by said data processing units (DPU);
- said controller (CTR) being configured to implement at least one heuristic evaluation of a security state (st_sec_{CTR}) of the computer equipment (OC) as perceived by said controller (CTR), said heuristic evaluation comprising:
(i) loading instructions into an instruction memory (MI) of said data processing unit (DPU) in order for it to perform at least one operation on at least one portion of said memory;
(ii) obtaining a result (ret₀, ret₊) of said operation;
(iii) determining said security state (st_sec_{CTR}) on the basis of said result;
- said controller (CTR) being configured to corrupt said memory depending on said security state (st_sec_{CTR}) in order to trigger a halt or a restart of the operation of said host processor (H-CPU) of said computer equipment (OC).

2. Securing module (MS) according to Claim 1, **characterized in that** said heuristic evaluation comprises a heuristic (H₀) stored in a certified manner in a nonvolatile memory (11) of said controller (CTR).

3. Securing module (MS) according to Claim 1 or 2, **characterized in that** said controller (CTR) is configured to receive a said heuristic (H₊) from said host processor (H-CPU) via said control channel (CC), said heuristic (H₊) being used for said at least one heuristic evaluation.

4. Securing module (MS) according to any one of Claims 1 to 3, **characterized in that** said controller (CTR) is configured to load instructions into an instruction memory (MI) of a said data processing unit (DPU) in order for it:
- to obtain a token (tokₑₓₜ) from a register (REG_{IN}) of the memory which can be accessed by this data processing unit (DPU);
- to verify a signature of said token (tokₑₓₜ) with a public key of a trusted third party (OP) in order to obtain a security state (st_sec_{OP}) of the computer equipment (OC) as perceived by said trusted third party (OP);
- to return this security state (st_sec_{OP}) to said controller (CTR);
- said controller (CTR) being configured to corrupt said memory depending:
(i) on the security state (st_sec_{CTR}) of the computer object as perceived by the controller (CTR); and
(ii) on the security state (st_sec_{OP}) of the computer object as perceived by the trusted third party.

5. Securing module (MS) according to any one of Claims 1 to 4, **characterized in that** said controller (CTR) is configured to load instructions into an instruction memory (MI) of a said data processing unit (DPU) in order for it:
- to obtain a token (tokᵢₙₜ) by encrypting said security state (st_sec_{CTR}) as perceived by said controller (CTR) with a public key (KPUB) of a trusted third party (OP); and
- to store said token (tokᵢₙₜ) in a register (REG_{OUT}) of the memory which can be accessed by this data processing unit (DPU).

6. Securing module (MS) according to any one of Claims 1 to 5, **characterized in that**, in order to corrupt a said memory, said controller (CTR) is configured to block access to said memory by said host processor.

7. Securing module (MS) according to any one of Claims 1 to 6, **characterized in that**, in order to corrupt a said memory, said controller (CTR) is configured to load instructions into an instruction memory (MI) of a said data processing unit (DPU) in order for it to store a datum in an area (ZR_{OS}) of said memory reserved for another use.

8. Securing module (MS) according to any one of Claims 1 to 7, **characterized in that** said at least one heuristic determines that the security state (st_sec_{CTR}) of the computer equipment (OC) as perceived by said controller (CTR), must represent a significant risk of said computer equipment malfunctioning if an area of a said memory normally intended to receive a constant from the operating system (OS) has been modified or accessed according to a pattern considered to be suspicious.

9. Securing module (MS) according to any one of Claims 1 to 8, **characterized in that** said at least one heuristic uses a learning method to determine, on the basis of a signature of the contents of at least one portion of at least one memory calculated by at least one said data processing unit (DPU), a probability that said computer equipment (OC) is in a malfunctioning state, the security state (st_sec_{CTR}) of the computer equipment (OC) as perceived by said controller (CTR) being determined on the basis of this probability.

10. Method (MS) for securing a computer equipment (OC), this method being implemented by a controller (CTR) embedded in a securing module (MS), said controller being configured to control access to a RAM memory area either by a host processor (H-CPU) via a memory bus, or by a data processing unit (DPU) via a DMA interface, said method comprising:
- implementing at least one heuristic evaluation of a security state (st_sec_{CTR}) of the computer equipment (OC), said heuristic evaluation (H₀, H₊) comprising:
(i) loading (E30, E40) instructions into an instruction memory (MI) of said data processing unit (DPU) in order for it to perform at least one operation on at least one portion of said memory;
(ii) obtaining (E30, E40) a result (ret₀, ret₊) of said operation;
(iii) determining (E50) said security state (st_sec_{CTR}) on the basis of said result;
- corrupting (E80) said memory depending on said security state (st_sec_{CTR}) in order to trigger a halt or a restart of the operation of said host processor (H-CPU) of said computer equipment (OC).

11. Computer equipment (OC) comprising a host processor (H-CPU) and at least one securing module (MS) according to any one of Claims 1 to 9.

12. Computer equipment (OC) according to Claim 11, said host processor (H-CPU) comprising a secure execution environment (TEE) configured to send a heuristic (H₊) used for said heuristic evaluation to said controller (CTR) via said control channel (CC).

13. Computer equipment (OC) according to Claim 11 or 12, said securing module (MS) being according to Claims 4 and 5, said host processor (H-CPU) being configured to execute an application process (PA) comprising instructions for:
- storing tokens (tokₑₓₜ) received from a trusted third party (OP) in a register (REG_{OUT}) of a said memory, these tokens (tokₑₓₜ) being said security states (st_sec_{OP}) of the computer equipment (OC) which are perceived by said trusted third party (OP) and signed by the private key (KPRIV) of said trusted third party; and for
- sending, to said trusted third party (OP), tokens (tokᵢₙₜ) read from a register (REG_{IN}) of a said memory and corresponding to security states (st_sec_{CTR}) of the computer equipment (OC) which are perceived by said controller encrypted by the public key (KPUB) of said trusted third party.

14. Computer program (PG) comprising instructions which, when the program is executed by a computer, lead it to execute the steps of the securing method according to Claim 10.

15. Information medium (14) which can be read by a controller (CTR) and comprising computer program instructions which, when they are executed by a computer, lead it to implement the securing method according to Claim 10.
